# EUROPÄISCHE PATENTANMELDUNG

(11) **EP 2 091 129 A2**
(43) Veröffentlichungstag der Anmeldung: **19.08.2009**
(21) Anmeldenummer: 09450017.0
(22) Anmeldetag: 28.01.2009
(51) Int. Cl.: H02J 17/00, H02J 5/00

(54) **Energieversorgungsmodul**

(30) Priorität: 18.02.2008 AT 2642008
(71) Anmelder: Lunatone Industrielle Elektronik GmbH, 1220 Wien (AT)
(72) Erfinder: Mair, Alexander, 2285 Breitstetten (AT); Ertl, Hans, 5270 Mauerkirchen (AT)
(74) Vertreter: Matschnig, Franz

(57) **Zusammenfassung**

Die Erfindung betrifft ein Energieversorgungsmodul (2,2') zur Versorgung eines elektrischen Gerätes (1,1') mit Energie, wobei das Energieversorgungsmodul (2,2') aus einem Gehäuse (3,3') besteht, in dessen Innenraum zumindest ein elektrochemischer Energiespeicher (4,4'), ein an den zumindest einen elektrochemischen Energiespeicher angeschlossener DC/AC-Konverter (5,5'), sowie eine Spule (6,6') angeordnet sind. Erfindungsgemäß ist das Gehäuse des Energieversorgungsmoduls vollständig und hermetisch von elektrisch isolierendem Material umschlossen ist oder das Gehäuse (3,3') aus einem elektrisch isolierenden Material gebildet, welches den Innenraum vollständig und hermetisch umschließt, wobei mittels der Spule (6,6') des Energieversorgungsmoduls (2,2') kontaktlos Energie an eine Gerätespule (7,7') des elektrischen Gerätes (1,1') übertragbar ist. Das Energieversorgungsmodul weist Umschaltmittel (11, 11',12',13') auf, mittels welcher das Energieversorgungsmodul (2,2') zwischen einem Ruhezustand, in welchem die Spule (6,6') des Energieversorgungsmoduls (2,2') stromlos ist, und einem aktivierten Zustand, in welchem die Spule (6,6') des Energieversorgungsmoduls (2,2') Energie an die Gerätespule (7,7') des elektrischen Gerätes (1,1') übertragen kann, umschaltbar ist.

## Beschreibung

Die Erfindung betrifft ein Energieversorgungsmodul zur Versorgung eines elektrischen Gerätes mit Energie, wobei das Energieversorgungsmodul aus einem Gehäuse besteht, in dessen Innenraum zumindest ein elektrochemischer Energiespeicher, ein an den zumindest einen elektrochemischen Energiespeicher angeschlossener DC/AC-Konverter, sowie eine Spule angeordnet sind.

Die netzunabhängige Energieversorgung mittels Einweg-Batterien bzw. aufladbaren Batterien/Akkumulatoren ("Akku") kann die Handhabung vieler elektrischer Geräte entscheidend verbessern. Werden elektrische Geräte mit Batterien oder Akkus gespeist, dann können diese einfach getauscht werden. Hier ergeben sich jedoch oft Probleme mit den galvanischen Kontakten, da diese besonders bei geringen Lastströmen zur Korrosion neigen. Weiters sind diese Ausführungen in nasser bzw. feuchter Umgebung nicht zuverlässig einsetzbar.

Um dieses Problem insbesondere für aufladbare Batterien/Akkus zu beseitigen, können diese fest in das elektrische Gerät eingebaut werden und mit diesem eine konstruktive Einheit bilden. Ein Betrieb in nasser bzw. feuchter Umgebung ist dadurch problemlos möglich. Üblicherweise werden die integrierten aufladbaren Batterien/Akkus entweder kontaktlos mittels Ladegerät oder durch vorübergehendes Anstecken des elektrischen Gerätes an das Stromnetz aufgeladen. In der Praxis kommt beim kontaktlosen Aufladen mittels Ladegerät am häufigsten eine induktive Übertragung der Energie zwischen einer Empfänger- und einer Sendespule zum Einsatz, da ein hoher Wirkungsgrad erreicht wird. Trotz der einfachen Handhabung haben integrierte aufladbare Batterien/Akkus den großen Nachteil, dass sie nicht bzw. nur bei Öffnen des Gerätes herausgenommen und gelagert werden können bzw. tauschbar sind (hohe Servicekosten). Die Lebensdauer eines elektrischen Geräts ist daher oft auf diejenige des Akkus beschränkt. Der Akku kann bei längerer Nichtbenutzung des elektrischen Gerätes Schaden nehmen, da auch im ausgeschalteten Gerät ein geringer Strom fließt, der mit der Zeit zu einer Tiefentladung führen kann. Nachteilig sind ferner auch die oftmals langen Ladezeiten und die Schwierigkeiten einer Designänderung, da Verbraucher und Ladegerät konstruktiv aufeinander abgestimmt sind.

Die oben genannte Technik hat sich besonders bei tragbaren, mehrmals täglich benutzten Verbrauchern mit kleiner Leistung (z.B. Funkfernsteuerungen, elektrische Zahnbürsten, Rasierapparate, Uhren, Telekommunikationsgeräte, GPS, Personal Digital Assistants, Spielzeuge) oder bei Unterbrechung der stationären Energieversorgung bzw. Fehlen einer Netzanbindung bewährt. Weitere Anwendungen sind solche, bei welchen eine Netzanbindung aus Sicherheitsgründen nicht zweckdienlich oder unzulässig ist (z.B. medizinische Implantate wie Cochlea-Implantate oder Herzschrittmacher; Unterwassergeräte).

Die US 6,208,115 B1 offenbart eine kontaktlos aufladbare Batterie, die jedoch über normale galvanische Kontakte an den Verbraucher angeschlossen wird. Die US 5,596,567 zeigt eine Vorrichtung, bei welcher eine Batterie über galvanische Kontakte aufgeladen wird, wobei Batterie und Ladegerät jedoch drahtlos miteinander kommunizieren können (Übertragung von Information hinsichtlich des Ladezustands des Akkus). Bei beiden Offenbarungen kommen die oben genannten Nachteile, insbesondere die Korrosion der galvanischen Kontakte, zum Tragen.

Ein Energieversorgungsmodul wie eingangs erwähnt ist weiters auch noch aus der EP 1 385 251 A1 bekannt, außerdem sind noch weitere Energieversorgungsmodule zur kontaktlosen Energieübertragung aus der US 6186 651 B1, der US 2006/061324 A1 und der EP 1 257 046 A2 bekannt.

Es ist eine Aufgabe der Erfindung, die aus dem Stand der Technik bekannten Nachteile zu beseitigen.

Diese Aufgabe wird durch ein eingangs genanntes Energieversorgungsmodul gelöst, bei welchem erfindungsgemäß das Gehäuse vollständig und hermetisch von elektrisch isolierendem Material umschlossen ist oder das Gehäuse aus einem elektrisch isolierenden Material gebildet ist, welches den Innenraum vollständig und hermetisch umschließt, und mittels der Spule des Energieversorgungsmoduls kontaktlos Energie an eine Gerätespule des elektrischen Gerätes übertragbar ist, wobei das Energieversorgungsmodul Umschaltmittel aufweist, mittels welcher das Energieversorgungsmodul zwischen einem Ruhezustand, in welchem die Spule des Energieversorgungsmoduls stromlos ist, und einem aktivierten Zustand, in welchem die Spule des Energieversorgungsmoduls Energie an die Gerätespule des elektrischen Gerätes übertragen kann, umschaltbar ist.

Dank der Erfindung wird ein nach außen hermetisch geschlossenes leicht tauschbares Energieversorgungsmodul bereitgestellt, welches ein zu speisendes elektrisches Gerät kontaktlos und unter Vermeidung galvanischer Kontakte mit elektrischer Energie versorgt.

Ein geschlossenes Gehäuse eines Energieversorgungsmoduls ist aus der US 5 923 544 A bekannt. Der Vorteil bei dem im Rahmen der vorliegenden Erfindung vorgestellten Energieversorgungsmodul ist allerdings, dass das Energieversorgungsmodul durch Einlegen/Anstecken in/an das elektrische Gerät mittels der Umschaltmittel in einen aktivierten Zustand gebracht bzw. nach dem Entfernen aus dem elektrischen Gerät wieder in den Ruhezustand versetzt werden kann. Durch dieses Merkmal kann die Lebensdauer eines Energieversorgungsmoduls verlängert werden, da bei Lagerung außerhalb des elektrischen Gerätes kein Strom durch die Spule des Energieversorgungsmoduls fließt. Im aktivierten Zustand fließt Strom durch die Spule.

Unter dem Begriff "hermetisch" ist erfindungsgemäß zu verstehen, dass das Gehäuse elektrisch isolierend ist und komplett dicht ist, insbesondere gegen Feuchtigkeit bzw. Nässe. Das Gehäuse ist gekapselt und weist weder Öffnungen noch elektrische Kontakte auf. Ein Betrieb in nasser oder feuchter Umgebung ist dadurch möglich. Vorzugsweise ist das Gehäuse aus einem leichten, aber wasserundurchlässigen und stabilen elektrisch isolierenden Material gefertigt. Günstigerweise ist das elektrisch isolierende Material ein schweißbarer Kunststoff oder Silikon.

Im hermetisch geschlossenen Gehäuse des Energieversorgungsmoduls sind ein elektrochemischer Energiespeicher und ein DC/AC-Konverter sowie eine Spule integriert. Das Energieversorgungsmodul kann induktiv Energie an den Verbraucher übertragen. Das Energieversorgungsmodul ist nicht fest in das elektrische Gerät eingebaut, sondern beispielsweise eingelegt, aufgesteckt oder angeflanscht und kann dadurch sehr einfach und schnell vom Laien getauscht werden. Energie wird durch die Spule des Energieversorgungsmoduls kontaktlos an die Gerätespule des elektrischen Gerätes übertragen und kann dort beispielsweise von einer der Gerätespule nachgeschalteten Gleichrichtereinheit wieder in Gleichstrom zur Versorgung aller elektrischen bzw. elektronischen Komponenten des Gerätes umgeformt werden.

Besonders geeignet ist die Erfindung für häufig gebrauchte portable Geräte mit geringer Leistung (z.B. Funkfernsteuerungen, Mobiltelefone, Rasierapparate). Die Lebensdauer des elektrischen Gerätes ist nicht auf die Lebensdauer eines Akkus beschränkt, so wie es bei Geräten mit fest integriertem Akku häufig der Fall ist. Die Erfindung lässt einen schnellen und unaufwändigen Wechsel des Energieversorgungsmoduls auch bei hermetisch dichten Geräten zu. Eine zwischenzeitliche Lagerung des Energieversorgungsmoduls außerhalb des Gerätes ist ebenso leicht möglich.

Im einfachsten und bevorzugten Fall wirken die Umschaltmittel auf einen Schalter, welcher bevorzugt zwischen dem elektrochemischen Energiespeicher und dem AC/DC-Konverter angeordnet ist. Mit dem Schalter, der entsprechend mit den Umschaltmitteln geschaltet wird, kann der elektrochemische Energiespeicher vom AC/DC-Konverter und somit auch von der Spule getrennt werden. Weiters kann der genannte Schalter selbst das Umschaltmittel sein.

Je nach gewähltem Umschaltmittel kann das Energieversorgungsmodul entweder automatisch bzw. selbsttätig oder manuell zwischen dem Ruhezustand und dem aktivierten Zustand umschalten, wie dies später im Detail noch erläutert wird. Manche Umschaltmittel können sowohl automatisch als auch manuell betätigt werden.

Um die Umschaltmittel zu aktivieren, ist es erfindungsgemäß vorgesehen, dass das elektrische Gerät Aktivierungsmittel zum Aktivieren der Umschaltmittel umfasst.

Bei einer ersten vorteilhaften Variante können die Umschaltmittel zumindest einen Magnetsensor umfassen. Die Aktivierungsmittel des elektrischen Gerätes sind bei dieser Variante zum Aktivieren zumindest eines Magnetsensors ausgebildet. Solche Magnetsensoren können beispielsweise als Reed-Relais, Hall-Sensor oder ein giant magnetoresistive (GMR)-Sensor ausgebildet sein, die durch einen sich im elektrischen Gerät an geeigneter Stelle angeordneten Permanentmagneten, welcher das Aktivierungsmittel ist, umgeschaltet werden können. Die Umschaltung erfolgt dabei automatisch durch Einlegen oder Aufstecken des Energieversorgungsmoduls in das Gerät. Reed-Relais und Hall-/GMR-Sensoren zeichnen sich durch eine hohe Zuverlässigkeit auch bei häufiger Betätigung aus.

Bei einer weiteren vorteilhaften Variante können die Umschaltmittel zumindest einen optischen Sensor umfassen. Das Umschalten kann manuell oder automatisch erfolgen. Beispielsweise kann der optische Sensor eine Photodiode bzw. ein Phototransistor sein, wobei ein Umschalten durch Lichteinfall erfolgt. Befindet sich das Energieversorgungsmodul im Ruhezustand, kann der optische Sensor beispielsweise mit einem lichtundurchlässigen Klebeband oder einem Schieber bedeckt sein. Die Aktivierung kann manuell durch Entfernen des Klebebands bzw. Schiebers erfolgen. Bei der automatischen Variante sind z.B. die Aktivierungsmittel des elektrischen Gerätes zum Aktivieren des optischen Sensors ausgebildet. Der Schieber kann dabei automatisch durch Einlegen des Energieversorgungsmoduls in das elektrische Gerät, welches entsprechend ausgebildet ist, verschoben werden.

Bei einer weiteren Variante können die Umschaltmittel zumindest einen akustischen Sensor umfassen. Beispielsweise kann der akustische Sensor als Mikrophon ausgebildet sein, wobei die Aktivierung durch manuelles Draufklopfen oder automatisch über eine bestimmte Tonfolge, welche vom elektrischen Gerät ausgesendet wird, erfolgen kann. Die Aktivierungsmittel des elektrischen Gerätes sind bei der automatischen Variante zum Aktivieren zumindest eines akustischen Sensors, beispielsweise zur Erzeugung einer erwähnten Tonfolge ausgebildet.

Eine weitere erfindungsgemäße Variante kann als Umschaltmittel zumindest einen Funksensor umfassen. Vorzugsweise wird eine kurzreichweitige Funktechnik verwendet. Das Umschalten erfolgt bei dieser Variante automatisch beim Einlegen des Energieversorgungsmoduls in das elektrische Gerät.

Ein besonders geeignetes Umschaltmittel ist z.B. ein RFID-Chip. Dieser Chip wird beim Einlegen des Energieversorgungsmoduls in das Gerät von Signalen (elektromagnetisches Wechselfeld), welche von den Aktivierungsmitteln des Gerätes ausgesendet werden, aktiviert, sodass das Energieversorgungsmodul erkennt, dass ein Verbraucher angeschlossen ist.

Der RFID-Chip in dem Energieversorgungsmodul kann weiters auch dazu eingerichtet sein, Informationen etwa über den Ladezustand an das Gerät zu übermitteln.

In analoger Weise kann auch Information von dem zu versorgenden Gerät an das Energieversorgungsmodul übermittelt werden.

Bei einer weiteren Variante umfassen die Umschaltmittel zumindest einen mechanischen Taster. Beispielsweise kann der mechanische Taster ein Membrantaster oder ein Piezo-Sensor sein. Die Aktivierung erfolgt dabei durch mechanischen Druck wie durch automatisches Drücken des mechanischen Tasters beim Einlegen in das elektrische Gerät oder manuelles Drücken des Tasters kurz vor dem Einlegen.

Bei einer weiteren Variante können die Umschaltmittel dazu eingerichtet sein, das Energieversorgungsmodul in regelmäßigen und/oder unregelmäßigen Intervallen zwischen dem aktivierten Zustand und dem Ruhezustand umzuschalten. Bei dieser Variante kann das Energieversorgungsmodul demnach von Zeit zu Zeit, vorzugsweise jedoch in regelmäßigen Zeitabständen (z.B. jede Minute), automatisch aktiv werden. Dabei fließt Strom durch die Spule des Energieversorgungsmoduls und das Energieversorgungsmodul erkennt, ob es sich in Kontakt mit einem Verbraucher befindet oder nicht. Ist kein Verbraucher vorhanden (Leerlauf), dann kehrt das Energieversorgungsmodul bis zum neuerlichen automatischen Aktivwerden wieder in den Ruhezustand zurück. Ist jedoch ein elektrisches Gerät vorhanden, dann sendet die Spule des Energieversorgungsmoduls weiterhin so lange Energie aus, bis das elektrische Gerät wieder entfernt wird. Die Steuerung dieses Vorgangs kann mittels einer entsprechenden Elektronik, beispielsweise mit einem Mikrocontroller, erfolgen.

Die Umschaltmittel können das Energieversorgungsmodul auch auf kapazitivem Weg zwischen einem Ruhezustand und einem aktivierten Zustand umschalten.

Das Energieversorgungsmodul kann als Einwegbatterie ausgebildet sein, wobei über die Spule des Energieversorgungsmoduls induktiv Energie übertragen wird. Besonders vorteilhaft ist es jedoch, wenn das Energieversorgungsmodul nach dem Entladen wieder aufgeladen werden kann. Dazu kann es vorgesehen sein, dass die Spule des Energieversorgungsmoduls als Sende-/Empfangsspule geschaltet ist. Die Spule kann dadurch sowohl Energie empfangen (z.B. über ein Ladegerät oder über das elektrische Gerät) als auch das elektrische Gerät mit Energie versorgen. Es ist natürlich auch denkbar, dass das Energieversorgungsmodul zwei Spulen aufweist, wobei eine Spule als Sendespule und die zweite Spule als Empfangsspule dient. Wird das elektrische Gerät auch zum Aufladen des Energieversorgungsmoduls verwendet, d.h. der Energiefluss verläuft vom elektrischen Gerät zum Energieversorgungsmodul, dann ist es zweckmäßig, wenn die Gerätespule des elektrischen Geräts als Sende-/Empfangsspule geschaltet ist.

Weiters ist es von Vorteil, wenn das Energieversorgungsmodul Kommunikationsmittel für eine drahtlose, uni- oder bidirektionale Kommunikation mit dem zu versorgenden Gerät umfasst. Dadurch können beispielsweise Informationen über den Ladezustand des Energieversorgungsmoduls weitergegeben werden. Ebenso wie das Energieversorgungsmodul kann das elektrische Gerät Kommunikationsmittel für eine drahtlose, uni- oder bidirektionale Kommunikation mit dem Energieversorgungsmodul umfassen.

Die Kommunikation kann mittels Funktechnik erfolgen. Ferner kann die Kommunikation über die jeweilige Spule erfolgen. Mittels einer bestimmten Pulsfolge oder einem bestimmten Spannungsmuster kann die Information von der Spule des Energieversorgungsmoduls an die Gerätespule des elektrischen Geräts und/oder vice versa übertragen werden.

Dabei kann es vorgesehen sein, dass die Kommunikationsmittel zum Austausch von Betriebsparametern und/oder zum Steuern von Betriebszuständen zwischen dem Energieversorgungsmodul und dem elektrischen Gerät ausgebildet sind.

Beispielsweise kann das Energieversorgungsmodul damit erkennen, welcher Verbraucher versorgt werden soll und die Energieversorgung entsprechend anpassen.

Bei einer Variante können die Kommunikationsmittel des Energieversorgungsmoduls als Umschaltmittel ausgebildet sein. Weiters können die Kommunikationsmittel des elektrischen Gerätes als Aktivierungsmittel ausgebildet sein.

Im Folgenden wird die Erfindung samt weiteren Vorzügen anhand von nicht einschränkenden Ausführungsbeispielen näher erläutert, die in der beigefügten Zeichnung dargestellt sind. Die Zeichnung zeigt in:
Fig. 1 ein erfindungsgemäßes Energieversorgungsmodul und ein entsprechendes elektrisches Gerät, und
Fig. 2 ein weiteres erfindungsgemäßes Energieversorgungsmodul und ein entsprechendes elektrisches Gerät.

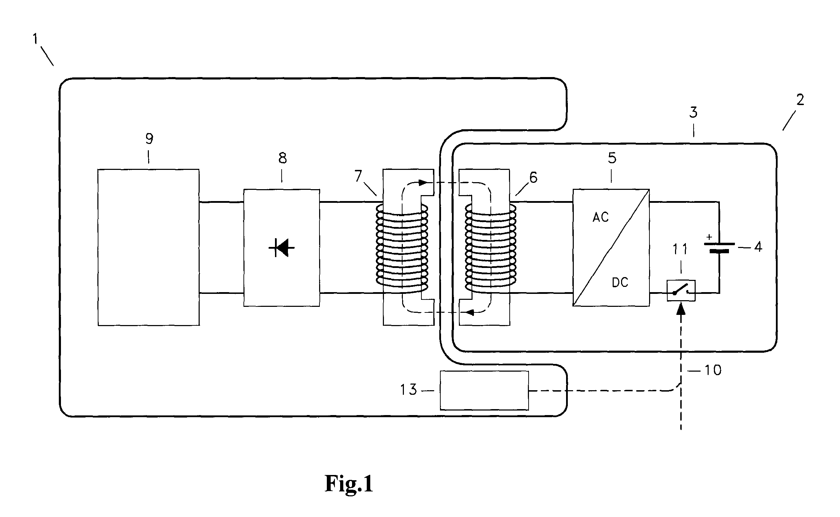

Aus der Fig. 1 ist ein elektrisches Gerät 1 ersichtlich, welches mit einem Energieversorgungsmodul 2 in Kontakt steht. Das Energieversorgungsmodul 2 weist ein hermetisch geschlossenes Gehäuse 3 aus elektrisch isolierendem Material (z.B. aus Kunststoff) auf, in welchem ein elektrochemischer Energiespeicher 4, ein an diesen angeschlossener AC/DC-Konverter 5 sowie eine Spule 6 angeordnet sind. Die Spule 6 überträgt kontaktlos auf induktivem Wege elektrische Energie an eine Gerätespule 7 des elektrischen Gerätes 1. Der Gerätespule 7 ist eine Gleichrichtereinheit 8 nachgeschaltet, welche die elektrische Energie wieder in Gleichstrom zur Versorgung aller elektrischen bzw. elektronischen Komponenten 9 im elektrischen Gerät 1 umformt. Das Energieversorgungsmodul 2 weist ferner als Umschaltmittel einen Schalter 11 auf, welcher zwischen dem AC/DC-Konverter 5 und dem elektrochemischen Energiespeicher 4 angeordnet ist. Durch Umschalten des Schalters 11 kann ein Stromfluss zwischen AC/DC-Konverter 5 bzw. Spule 6 und dem elektrochemischen Speicher 4 hergestellt oder unterbrochen werden. Der Schalter 11 kann von außen aktiviert werden, wobei die Aktivierung mittels eines Aktivierungssignals 10 manuell oder automatisch erfolgen kann. In der in der Fig.1 gezeigten Ausführungsform ist der Schalter 11 ein Reed-Relais. Zum Schließen des Reed-Relais ist im elektrischen Gerät 1 ein Permanentmagnet 13 als Aktivierungsmittel positioniert.

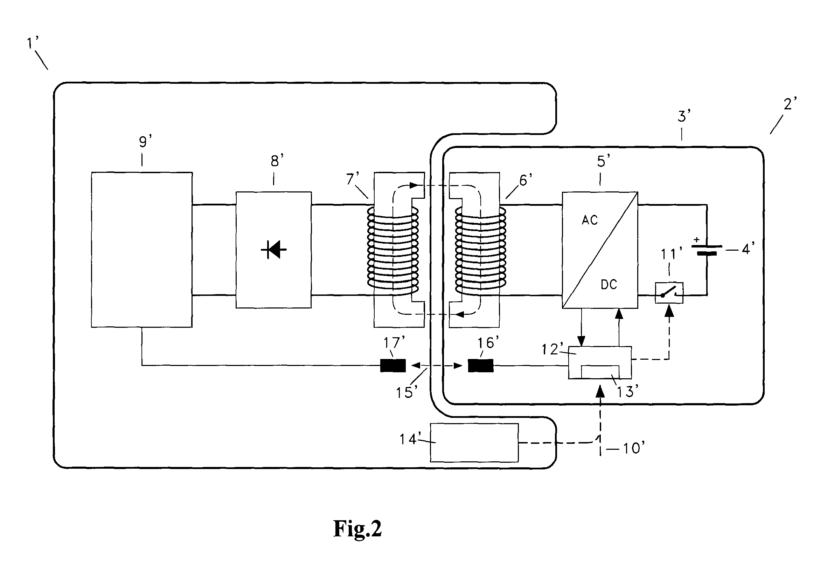

Die Fig. 2 zeigt ein elektrisches Gerät 1', welches mit einem Energieversorgungsmodul 2' in Kontakt steht. Das Energieversorgungsmodul 2' weist ein hermetisch geschlossenes Gehäuse 3' aus elektrisch isolierendem Material (z.B. aus Kunststoff) auf, in welchem ein elektrochemischer Energiespeicher 4', ein an diesen angeschlossener AC/DC-Konverter 5' sowie eine Spule 6' angeordnet sind. Die Spule 6' überträgt kontaktlos auf induktivem Wege elektrische Energie an eine Gerätespule 7' des elektrischen Gerätes 1'. Der Gerätespule 7' ist eine Gleichrichtereinheit 8' nachgeschaltet, welche die elektrische Energie wieder in Gleichstrom zur Versorgung aller elektrischen bzw. elektronischen Komponenten 9' im elektrischen Gerät 1' umformt. Die Umschaltmittel des Energieversorgungsmoduls 2' umfassen in diesem Ausführungsbeispiel einen Magnetsensor 13', eine Steuerung 12' sowie einen Schalter 11'. Der Magnetsensor 13' und der Schalter 11' sind mit der Steuerung 12' verbunden. Der Schalter 11' ist zwischen dem AC/DC-Konverter 5' und dem elektrochemischen Energiespeicher 4' angeordnet. Der Magnetsensor 13' kann den Schalter 11' über die Steuerung 12' umschalten und einen Stromfluss zwischen AC/ DC-Konverter 5' bzw. Spule 6' und elektrochemischen Speicher 4' herstellen oder unterbrechen. Der Magnetsensor 13' kann von außen aktiviert werden, wobei die Aktivierung mittels eines Aktivierungssignals 10' automatisch erfolgt. Die Aktivierung des Magnetsensors 13' bewirkt ein Schließen des Schalters 11' und somit des Stromkreises zwischen AC/DC-Konverter 5' und dem elektrochemischen Energiespeicher 4'. Der Magnetsensor 13' in diesem Ausführungsbeispiel ist ein Reed-Relais. Zum Aktivieren des Magnetsensors 13' ist im elektrischen Gerät 1' ein Permanentmagnet 14' als Aktivierungsmittel positioniert.

Bei einer anderen Möglichkeit kann der Magnetsensor 13' durch einen optischen Sensor ersetzt sein und das entsprechende Aktivierungsmittel 14' kann eine Lichtquelle sein. Bei einer weiteren Möglichkeit kann anstelle des Magnetsensors 13' ein akustischer Sensor verwendet werden, wobei das Aktivierungsmittel 14' eine bestimmte Tonfolge erzeugt, welche vom akustischen Sensor erkannt wird. Bei noch einer weiteren Möglichkeit kann der Magnetsensor 13' durch einen Funksensor ersetzt sein, welcher Signale, die vom Aktivierungsmittel 14' ausgesendet werden, erkennt.

Zu Kommunikationszwecken ist das Energieversorgungsmodul 2' weiters mit dem elektrischen Gerät 1' über einen bidirektional wirkenden Übertragungsweg 15' verbunden. Die Kommunikation erfolgt dabei drahtlos mittels eines Kommunikationsmittels 16' des Energieversorgungsmoduls 2', welches mit einem Kommunikationsmittel 17' des elektrischen Gerätes 1' über den Übertragungsweg 15' kommuniziert.

Die oben beschriebenen Verwirklichungen sind nur Beispiele unter vielen und folglich nicht als einschränkend zu betrachten.

## Patentansprüche

1. Energieversorgungsmodul (2,2') zur Versorgung eines elektrischen Gerätes (1,1') mit Energie, wobei das Energieversorgungsmodul (2,2') aus einem Gehäuse (3,3') besteht, in dessen Innenraum zumindest ein elektrochemischer Energiespeicher (4,4'), ein an den zumindest einen elektrochemischen Energiespeicher angeschlossener DC/AC-Konverter (5,5'), sowie eine Spule (6,6') angeordnet sind,
**dadurch gekennzeichnet, dass**
das Gehäuse des Energieversorgungsmoduls vollständig und hermetisch von elektrisch isolierendem Material umschlossen ist oder das Gehäuse (3,3') aus einem elektrisch isolierenden Material gebildet ist, welches den Innenraum vollständig und hermetisch umschließt, und mittels der Spule (6,6') des Energieversorgungsmoduls (2,2') kontaktlos Energie an eine Gerätespule (7,7') des elektrischen Gerätes (1,1') übertragbar ist, und wobei das Energieversorgungsmodul Umschaltmittel (11, 11',12',13') aufweist, mittels welcher das Energieversorgungsmodul (2,2') zwischen einem Ruhezustand, in welchem die Spule (6,6') des Energieversorgungsmoduls (2,2') stromlos ist, und einem aktivierten Zustand, in welchem die Spule (6,6') des Energieversorgungsmoduls (2,2') Energie an die Gerätespule (7,7') des elektrischen Gerätes (1,1') übertragen kann, umschaltbar ist.

2. Energieversorgungsmodul nach Anspruch 1, **dadurch gekennzeichnet, dass** die Umschaltmittel zumindest einen Magnetsensor (11,13') oder zumindest einen optischen Sensor (13') oder zumindest einen akustischen Sensor (13') oder zumindest einen Funksensor (13') oder zumindest einen mechanischen Taster umfassen.

3. Energieversorgungsmodul nach Anspruch 1, **dadurch gekennzeichnet, dass** die Umschaltmittel dazu eingerichtet sind, das Energieversorgungsmodul in regelmäßigen und/oder unregelmäßigen Intervallen zwischen dem aktivierten Zustand und dem Ruhezustand umzuschalten.

4. Energieversorgungsmodul nach einem der Ansprüche 1 bis 3, **dadurch gekennzeichnet, dass** die Spule (6,6') des Energieversorgungsmoduls (2,2') als Sende-/Empfangsspule geschaltet ist.

5. Energieversorgungsmodul nach einem der Ansprüche 1 bis 4, **dadurch gekennzeichnet, dass** es Kommunikationsmittel (16') für eine drahtlose, uni- oder bidirektionale Kommunikation mit dem zu versorgenden Gerät (1') umfasst.

6. Energieversorgungsmodul nach Anspruch 5, **dadurch gekennzeichnet, dass** die Kommunikationsmittel (16') zum Austausch von Betriebsparametern und/oder zum Steuern von Betriebszuständen zwischen dem Energieversorgungsmodul (2') und dem elektrischen Gerät (1') ausgebildet sind.

7. Energieversorgungsmodul nach Anspruch 5 oder 6, **dadurch gekennzeichnet, dass** die Kommunikationsmittel als Umschaltmittel ausgebildet sind.

8. Elektrisches Gerät mit zumindest einer Gerätespule zum kontaktlosen Empfang von Energie über ein Energieversorgungsmodul nach Anspruch 1, **dadurch gekennzeichnet, dass** es Aktivierungsmittel (13,14') zum Aktivieren der Umschaltmittel (11,11',12',13') umfasst.

9. Elektrisches Gerät nach Anspruch 8, **dadurch gekennzeichnet, dass** die Aktivierungsmittel (14') zum Aktivieren zumindest eines Magnetsensors (13') ausgebildet sind.

10. Elektrisches Gerät nach Anspruch 8, **dadurch gekennzeichnet, dass** die Aktivierungsmittel (14') zum Aktivieren zumindest eines optischen Sensors (13') ausgebildet sind.

11. Elektrisches Gerät nach Anspruch 8, **dadurch gekennzeichnet, dass** die Aktivierungsmittel (14') zum Aktivieren zumindest eines akustischen Sensors (13') ausgebildet sind.

12. Elektrisches Gerät nach Anspruch 8, **dadurch gekennzeichnet, dass** die Aktivierungsmittel (14') zum Aktivieren zumindest eines Funksensors (13') ausgebildet sind.

13. Elektrisches Gerät nach einem der Ansprüche 8 bis 12, **dadurch gekennzeichnet dass** die Gerätespule (7,7') des elektrischen Gerätes (1,1') als Sende-/Empfangsspule geschaltet ist.

14. Elektrisches Gerät nach einem der Ansprüche 8 bis 13, **dadurch gekennzeichnet, dass** es Kommunikationsmittel (17') für eine drahtlose, uni- oder bidirektionale Kommunikation mit dem Energieversorgungsmodul (2') umfasst.

15. Elektrisches Gerät nach einem der Ansprüche 8 bis 14, **dadurch gekennzeichnet, dass** die Kommunikationsmittel als Umschaltmittel ausgebildet sind.
